(19) Europäisches Patentamt
European Patent Office
Office européen des brevets

(11) Veröffentlichungsnummer : **0 118 864**
**B1**

(12) # EUROPÄISCHE PATENTSCHRIFT

(45) Veröffentlichungstag der Patentschrift : **07.05.86**

(51) Int. Cl.⁴ : **C 07 F 9/65**, A 01 N 57/32

(21) Anmeldenummer : **84102350.0**

(22) Anmeldetag : **05.03.84**

(54) **Pyrimidinylderivate.**

(30) Priorität : **15.03.83 DE 3309124**

(43) Veröffentlichungstag der Anmeldung : **19.09.84 Patentblatt 84/38**

(45) Bekanntmachung des Hinweises auf die Patenterteilung : **07.05.86 Patentblatt 86/19**

(84) Benannte Vertragsstaaten : **BE CH DE FR GB IT LI NL**

(56) Entgegenhaltungen :
**EP-A- 0 009 566**
**FR-A- 2 365 577**

(73) Patentinhaber : **BAYER AG**
**Konzernverwaltung RP Patentabteilung**
**D-5090 Leverkusen 1 Bayerwerk (DE)**

(72) Erfinder : **Maurer, Fritz, Dr.**
**Roeberstrasse 8**
**D-5600 Wuppertal 1 (DE)**
Erfinder : **Homeyer, Bernhard, Dr.**
**Obere Strasse 28**
**D-5090 Leverkusen 3 (DE)**
Erfinder : **Becker, Benedikt, Dr.**
**Metzkausenerstrasse 14**
**D-4020 Mettmann (DE)**
Erfinder : **Hänssler, Gerd, Dr.**
**Heymannstrasse 40**
**D-5090 Leverkusen 1 (DE)**

**EP 0 118 864 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft substituierte Pyrimidin-5-yl-(thio) phosphorsäureesteramide, Verfahren zu ihrer Herstellung und ihre Verwendung als Schädlingsbekämpfungsmittel, insbesondere als Arthropodizide, Nematizide und Fungizide.

Es ist bekannt, daß bestimmte Thiophosphorsäureesteramide, wie z. B. O-Ethyl-O-(2-methyl-pyrimidin-5-yl)-N-methyl-, O-Ethyl-O-(2-methyl-pyrimidin-5-yl)-N-i-propyl- und O-Ethyl-O-(2-i-propyl-pyrimidin-5-yl)-N-i-propylthiophosphorsäureesteramid, insektizid wirksam sind (vgl. DE-OS 26 43 262).

Außerdem ist bekannt, daß bestimmte Bis-dithiocarbamate, wie z. B. Zinkethylen-bis-dithiocarbamat, fungizid wirksam sind (vgl. US-PS 24 57 674 und 30 50 439). Die Wirkung dieser Verbindungen ist jedoch, insbesondere bei niedrigen Aufwandmengen und Konzentrationen, nicht immer voll zufriedenstellend.

Es wurden nun substituierte Pyrimidin-5-yl-(thio)-phosphorsäureesteramide der allgemeinen Formel (I) gefunden,

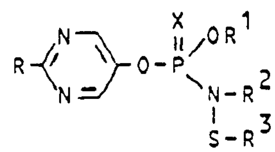

(I)

in welcher

X für Sauerstoff oder Schwefel steht,

R für Wasserstoff, Alkyl, Aryl oder Cycloalkyl steht,

$R^1$ und $R^2$ gleich oder verschieden sind und für Alkyl stehen und

$R^3$ für Alkyl, Halogenalkyl, Cyanoalkyl, Mono- oder Dialkylamino, gegebenenfalls substituiertes Aryl oder für die Gruppierungen

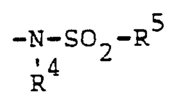 oder 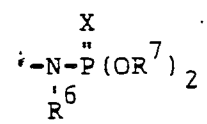

steht, in welcher

X die oben angegebene Bedeutung hat,

$R^4$, $R^6$ und $R^7$ gleich oder verschieden sind und für Alkyl stehen und

$R^5$ für Alkyl oder gegebenenfalls substituiertes Aryl steht.

Weiterhin wurde gefunden, daß man die substituierten Pyrimidin-5-yl-(thio) phosphorsäureesteramide der Formel (I) erhält, wenn man

a) Phosphorsäureesteramide der allgemeinen Formel (II),

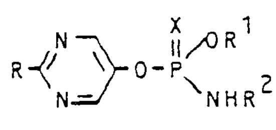

(II)

in welcher X, R, $R^1$ und $R^2$ die oben angegebene Bedeutung haben, mit Sulfenylhalogeniden der allgemeinen Formel (III),

$$R^3—S—Hal \qquad (III)$$

in welcher

$R^3$ die oben angegebene Bedeutung hat und

Hal für Halogen, wie Chlor oder Brom steht,

gegebenenfalls in Gegenwart eines Säureakzeptors und gegebenenfalls in Gegenwart eines Verdünnungsmittels umsetzt, oder

b) 5-Hydroxypyrimidine der allgemeinen Formel (IV)

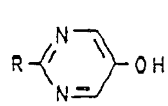

(IV)

in welcher R die oben angegebene Bedeutung hat, oder die entsprechenden Alkalimetall-, Erdalkalimetall- oder Ammoniumsalze mit sulfenylierten Phosphorsäureesteramidhalogeniden der allgemeinen Formel (V),

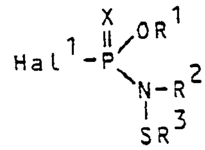

(V)

in welcher

X, $R^1$, $R^2$ und $R^3$ die oben angegebene Bedeutung haben und

$Hal^1$ für Halogen, wie Chlor oder Brom, steht,

gegebenenfalls in Gegenwart eines Säureakzeptors und gegebenenfalls in Gegenwart eines Verdünnungsmittels umsetzt.

Die substituierten Pyrimidin-5-yl-(thio) phosphorsäureesteramide der Formel (I) zeichnen sich durch hohe Wirksamkeit als Schädlingsbekämpfungsmittel, insbesondere durch hohe arthropodizide (insbesondere insektizide und akarizide), nematizide und fungizide Wirksamkeit aus.

Die Alkylreste R, $R^1$, $R^2$, $R^3$, $R^4$, $R^5$, $R^6$ und $R^7$ sowie die Alkylteile der Halogenalkyl-, Cyanoalkyl- und Mono- oder Dialkylaminoreste $R^3$ können verzweigt oder unverzweigt sein und enthalten jeweils 1 bis 12, vorzugsweise jeweils 1 bis 8, insbesondere 1 bis 6 und besonders bevorzugt 1 bis 4 Kohlenstoffatome. Halogenalkyl enthält vorzugsweise 1 bis 5, insbesondere 1 bis 3 gleiche oder verschiedene Halogenatome, wie Fluor, Chlor, Brom und Jod, vorzugsweise Fluor und Chlor. Als Beispiele für diese Reste seien genannt: Methyl, Ethyl, n-Propyl, i-Propyl, n-Butyl, i-Butyl, sec.-Butyl, tert.-Butyl, n-Pentyl, 1-Methyl-butyl, 2-Methyl-butyl, 3-Methyl-butyl, 1,1-Dimethyl-propyl, 2,2-Dimethyl-propyl, 1,2-Dimethyl-propyl und 1-Ethyl-propyl, Cyanomethyl, Cyanoethyl, Cyano-n-propyl, Cyano-i-propyl, Chlormethyl, Chlorethyl, Chlor-n-propyl, Chlor-i-propyl, Chlordifluormethyl, Di-chlorfluormethyl, Trifluormethyl, Trifluorethyl, Chlordifluorethyl, Dichlorfluorethyl, Pentafluor-n-propyl, (Di)-Methylamino, (Di)-Ethylamino, (Di)-n-Propylamino, (Di)-i-Propylamino, (Di)-n-Butylamino, (Di)-i-Butylamino, Ethyl-methylamino, n-Propyl-methylamino, i-Propyl-methylamino, n-Butyl-methylamino, i-Butyl-methylamino, sec.-Butyl-methylamino, tert.-Butyl-methylamino, n-Propyl-ethylamino, i-Propyl-ethylamino, n-Butyl-ethylamino, i-Butyl-ethylamino, sec.-Butyl-ethylamino, tert.-Butyl-ethylamino, i-Propyl-n-propylamino, n-Butyl-n-propylamino, i-Butyl-n-propylamino, sec.-Butyl-n-propylamino, tert.-Butyl-n-propylamino, n-Butyl-i-propylamino, i-Butyl-i-propylamino, i-Butyl-n-butylamino, sec.-Butyl-n-butylamino oder tert.-Butyl-n-butylamino.

Für R und gegebenenfalls substituiertes $R^3$ und $R^5$ steht gegebenenfalls substituiertes Phenyl oder Naphthyl, insbesondere gegebenenfalls substituiertes Phenyl.

Als Cycloalkyl R steht Cycloalkyl mit 3 bis 8, insbesondere 3 bis 6 Kohlenstoffatomen. Beispielhaft seien Cyclopropyl, Cyclobutyl, Cyclopentyl und Cyclohexyl genannt.

Die gegebenenfalls substituierten Arylreste $R^3$ und $R^5$ können einen oder mehrere, vorzugsweise 1 bis 3, insbesondere 1 oder 2 gleiche oder verschiedene Substituenten tragen.

Als Substituenten seien beispielhaft aufgeführt: Alkyl mit 1 bis 4, insbesondere 1 oder 2 Kohlenstoffatomen, wie Methyl, Ethyl n- und i-Propyl und n-, i-, s- und t-Butyl; Alkoxy mit 1 bis 4, insbesondere 1 oder 2 Kohlenstoffatomen, wie Methoxy, Ethoxy, n- und i-Propyloxy und n-, i-, s- und t-Butyloxy; Alkylthio mit 1 bis 4, insbesondere 1 oder 2 Kohlenstoffatomen, wie Methylthio, Ethylthio, n- und i-Propylthio und n-, i-, s- und t-Butylthio; Halogenalkyl mit 1 bis 4, insbesondere 1 oder 2 Kohlenstoffatomen und 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Halogenalkoxy mit 1 bis 4, insbesondere 1 oder 2 Kohlenstoffatomen und 1 bis 5, insbesondere 1 bis 3 Halogenatomen, wobei die Halogenatome gleich oder verschieden sind und als Halogenatome vorzugsweise Fluor, Chlor oder Brom, insbesondere Fluor stehen, wie Trifluormethoxy, Halogen, vorzugsweise Fluor, Chlor, Brom und Iod, insbesondere Chlor und Brom; Cyano und Nitro.

Halogen steht, wo nicht anders erläutert, für Fluor, Chlor, Brom und Iod, vorzugsweise für Chlor und Fluor, wobei die Halogenatome gleich oder verschieden sein können.

Die Erfindung betrifft vorzugsweise Verbindungen der allgemeinen Formel (I), in welcher

X für Sauerstoff oder Schwefel (vorzugsweise Schwefel) steht,

R für Wasserstoff, Alkyl mit 1 bis 6 Kohlenstoffatomen, Phenyl oder Naphthyl oder Cycloalkyl mit 3 bis 6 Kohlenstoffatomen steht,

$R^1$ und $R^2$ gleich oder verschieden sind und für Alkyl mit 1 bis 6 Kohlenstoffatomen stehen,

$R^3$ für Alkyl, Halogenalkyl, Cyanoalkyl, Mono- oder Di-Alkylamino jeweils mit 1 bis 6 Kohlenstoffatomen je Alkylteil, für Phenyl oder Naphthyl, welches durch einen oder mehrere (vorzugsweise 1 bis 3, insbesondere 1 oder 2) gleiche oder verschiedene Substituenten, aus der Reihe Halogen (wie Fluor, Chlor oder Brom), Cyano, Nitro, Halogenalkyl und/oder Halogenalkoxy mit 1 bis 6 Kohlenstoffatomen und 1 bis 5 gleichen oder verschiedenen Halogenatomen (wie Fluor, Chlor oder Brom) und/oder Alkyl mit 1 bis 4 Kohlenstoffatomen substituiert sein kann, steht oder für die Gruppierungen

$$-\underset{R^4}{N}-SO_2-R^5 \quad \text{oder} \quad -\underset{R^6}{N}-\overset{X}{\overset{\|}{P}}(OR^7)_2$$

steht, in welcher

X die oben angegebene Bedeutung hat,

$R^4$, $R^6$ und $R^7$ gleich oder verschieden sind und für Alkyl mit 1 bis 6 Kohlenstoffatomen stehen und

$R^5$ für Alkyl mit 1 bis 6 Kohlenstoffatomen oder für Phenyl oder Naphthyl, welches durch einen oder mehrere (vorzugsweise 1 bis 3, insbesondere 1 oder 2) gleiche oder verschiedene Substituenten aus der Reihe Halogen (wie Fluor, Chlor oder Brom), Cyano, Nitro, Halogenalkyl und/oder Halogenalkoxy mit 1 bis 6 Kohlenstoffatomen und 1 bis 5 gleichen oder verschiedenen Halogenatomen (wie Fluor, Chlor oder Brom) und/oder Alkyl mit 1 bis 4 Kohlenstoffatomen substituiert sein kann, steht.

Besonders bevorzugt sind die Verbindungen der allgemeinen Formel (I), in welcher

X für Sauerstoff oder Schwefel (vorzugsweise Schwefel) steht,

R für Wasserstoff, Alkyl mit 1 bis 4 Kohlenstoffatomen, Phenyl oder Cycloalkyl mit 3 bis 6 Kohlenstoffatomen steht,

$R^1$ und $R^2$ gleich oder verschieden sind und für Alkyl mit 1 bis 4 Kohlenstoffatomen oder n-Pentyl, 1-Methyl-butyl, 2-Methyl-butyl, 3-Methyl-butyl, 1,1-Dimethyl-propyl, 2,2-Dimethyl-propyl, 1,2-Dimethyl-propyl und 1-Ethyl-propyl stehen,

$R^3$ für Alkyl mit 1 bis 4 Kohlenstoffatomen, Cyanoalkyl mit 1 bis 4 Kohlenstoffatomen, Halogenalkyl mit 1 bis 4 Kohlenstoffatomen und 1 bis 5 Halogenatomen, Mono- oder Dialkylamino mit 1 bis 4 Kohlenstoffatomen je Alkylgruppe oder für Phenyl, welches durch einen oder zwei gleiche oder verschiedene Substituenten aus der Reihe Halogen, Cyano, Nitro, Alkyl mit 1 bis 4 Kohlenstoffatomen, Halogenalkyl mit 1 bis 4 Kohlenstoffatomen und 1 bis 3 Halogenatomen und/oder Halogenalkoxy mit 1 bis 4 Kohlenstoffatomen und 1 bis 3 Halogenatomen substituiert sein kann, steht, oder für die Gruppierungen

$$-\underset{R^4}{N}-SO_2-R^5 \quad \text{oder} \quad -\underset{R^6}{N}-\overset{X}{\overset{\|}{P}}(OR^7)_2$$

steht, in welcher

X die oben angegebene Bedeutung hat,

$R^4$, $R^6$ und $R^7$ gleich oder verschieden sind und für Alkyl mit 1 bis 4 Kohlenstoffatomen stehen und

$R^5$ für Alkyl mit 1 bis 4 Kohlenstoffatomen, Phenyl, welches durch einen oder zwei gleiche oder verschiedene Substituenten aus der Reihe Halogen, Cyano, Nitro, Alkyl mit 1 bis 4 Kohlenstoffatomen, Halogenalkyl mit 1 bis 4 Kohlenstoffatomen und 1 bis 3 Halogenatomen und/oder Halogenalkoxy mit 1 bis 4 Kohlenstoffatomen und 1 bis 3 Halogenatomen substituiert sein kann, steht.

Ganz besonders bevorzugt sind die Verbindungen der allgemeinen Formel (I), in welcher

X für Sauerstoff oder Schwefel (vorzugsweise Schwefel) steht,

R für Wasserstoff, Methyl, Ethyl, n-Propyl, i-Propyl, n-Butyl, i-Butyl, sec.-Butyl, tert.-Butyl, Phenyl, Cyclopropyl und Cyclohexyl steht,

$R^1$ und $R^2$ gleich oder verschieden sind und für Methyl, Ethyl, n-Propyl, i-Propyl, n-Butyl, i-Butyl, sec.-Butyl, tert.-Butyl, n-Pentyl, 1-Methyl-butyl, 2-Methyl-butyl, 3-Methyl-butyl, 1,1-Dimethyl-propyl, 1,2-Dimethyl-propyl, 2,2-Dimethyl-propyl oder 1-Ethyl-propyl stehen,

$R^3$ für Methyl, Ethyl, n-Propyl, i-Propyl, n-Butyl, i-Butyl, sec.-Butyl, tert.-Butyl, Cyano-n-propyl, Cyano-i-propyl, Chlormethyl, Chlorethyl, Dichlorfluormethyl, Dichlorfluormethyl, Di-(n)-propylamino, Di-(i)-propylamino, Di-(n)-butylamino, Phenyl, Chlorphenyl, Methylphenyl, Chlor-trifluormethyl-phenyl oder für die Gruppierungen

$$-\underset{R^4}{N}-SO_2-R^5 \quad \text{oder} \quad -\underset{R^6}{N}-\overset{X}{\overset{\|}{P}}(OR^7)_2$$

steht, in welcher

X die oben angegebene Bedeutung hat,

$R^4$, $R^6$ und $R^7$ gleich oder verschieden sind und für Methyl, Ethyl, n-Propyl und/oder i-Propyl stehen und

$R^5$ für Methyl, Phenyl und Methylphenyl steht.

Unter den Verbindungen der allgemeinen Formel (I) zeichnen sich die Verbindungen, in welchen X für Schwefel steht durch besonders vorteilhafte Eigenschaften aus.

Verwendet man beispielsweise für die erfindungsgemäße Verfahrensvariante (a) O-Ethyl-O-(2-methyl-pyrimidin-5-yl)-N-methyl-thiophosphorsäureesteramid und Dichlorfluormethan-sulfenylchlorid als Ausgangsstoffe, so kann die entsprechende Reaktion durch das folgende Formelschema skizziert werden :

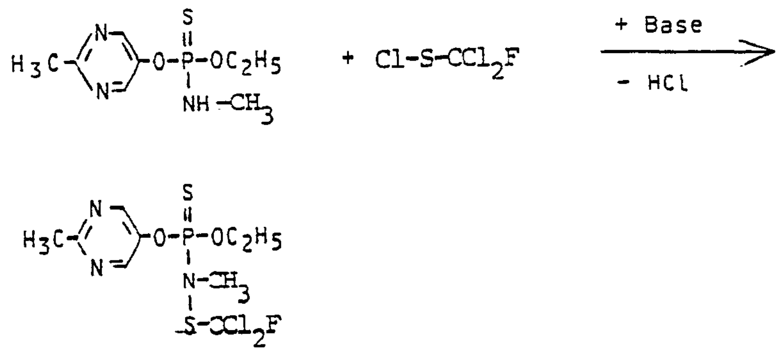


Verwendet man beispielsweise für die erfindungsgemäße Verfahrensvariante (b) 2-Cyclopropyl-5-hydroxy-pyrimidin und O-Ethyl-N-methyl-N-phenylthio-thiophosphorsäureesteramidchlorid als Ausgangsstoffe, so kann die entsprechende Reaktion durch das folgende Formelschema skizziert werden :

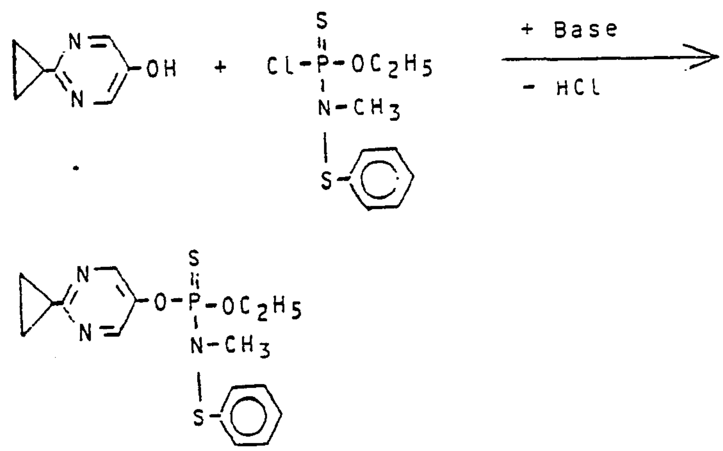


Die bei der erfindungsgemäßen Verfahrensvariante (a) als Ausgangsstoffe für die Herstellung der neuen Verbindungen der Formel (I) einzusetzenden Phosphorsäureesteramide sind durch die Formel (II) definiert. In dieser Formel stehen X, R, $R^1$ und $R^2$ für diejenigen Reste, welche oben bei der Definition in Formel (I) angegeben sind.

Die Verbindungen der Formel (II) sind bekannt und/oder können nach allgemein bekannten Verfahren und Methoden hergestellt werden (vgl. z. B. DE-OS 26 43 262, DE-OS 27 06 127 und DE-OS 28 35 492).

Die bei der Verfahrensvariante (a) außerdem als Ausgangsstoffe einzusetzenden Sulfenylhalogenide sind durch die Formel (III) definiert. In dieser Formel steht $R^3$ für diejenigen Reste, welche oben bei der Definition in Formel (I) angegeben sind. Hal steht in dieser Formel für Halogen, wie insbesondere Chlor oder Brom.

Die Verbindungen der Formel (III) sind bekannt und/oder können nach allgemein bekannten Methoden hergestellt werden (vgl. z. B. Methoden der organischen Chemie, (Houben-Weyl-Müller) Thieme Verlag Stuttgart, 4. Auflage, Band 9, S. 268 ff.).

Die bei der Verfahrensvariante (b) als Ausgangsstoffe einzusetzenden 5-Hydroxypyrimidine bzw. die entsprechenden Alkalimetall-, Erdalkalimetall- oder Ammoniumsalze sind durch die Formel (IV) definiert. In dieser Formel steht R für diejenigen Reste, welche oben bei der Definition in Formel (I) angegeben sind. Alkali- und Erdalkalimetallsalze sind vorzugsweise Lithium-, Kalium-, Natrium- und Calziumsalze, insbesondere Kalium-, Natrium- und Calziumsalze.

Die Verbindungen der Formel (IV) sind bekannt und/oder können nach allgemein bekannten Verfahren und Methoden hergestellt werden (vgl. z. B. DE-OS 26 43 262, DE-OS 27 06 127, DE-OS 28 35 492 und J. Chem. Soc., *1960*, 4590).

Die bei der Verfahrensvariante (b) außerdem als Ausgangsstoffe einzusetzenden sulfenylierten Phosphorsäureester amidhalogenide sind durch die Formel (V) definiert. In dieser Formel stehen X, $R^1$, $R^2$ und $R^3$ für diejenigen Reste, welche bei der Definition in Formel (I) angegeben sind. $Hal^1$ steht in dieser Formel für Halogen, insbesondere Chlor oder Brom.

Die Verbindungen der Formel (V) können nach üblichen Methoden hergestellt werden, z. B. durch Umsetzung von Phosphorsäureamidhalogeniden mit Sulfenylhalogeniden der Formel (III) in Gegenwart von mit Wasser nicht mischbaren organischen Verdünnungsmitteln, wie z. B. Toluol und gegebenenfalls in Gegenwart von Säureakzeptoren, wie z. B. Triethylamin, bei Temperaturen zwischen − 20 °C und + 40 °C.

Die erfindungsgemäßen Verfahrensvariaten (a) und (b) zur Herstellung der neuen substituierten Pyrimidin-5-yl-(thio)phosphorsäureestamide der Formel (I) werden bevorzugt unter Verwendung von Verdünnungsmitteln durchgeführt. Als Verdünnungsmittel kommen praktisch alle inerten organischen Lösungsmittel in Frage.

Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile wie z. B. Acetonitril und Propionitril, Amide, wie z. B. Dimethylformamid, Dimethylacetamid und N-Methylpyrrolidon, sowie Dimethylsulfoxid, Tetramethylensulfon und Hexamethylphosphorsäuretriamid.

Die Verfahren können gegebenenfalls in Gegenwart von Säureakzeptoren durchgeführt werden. Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, Alkalihydride, wie Natriumhydrid, ferner aliphatische, aromatische oder heterocyclische Amine, beispielsweise Triethylamin, Trimethylamin, Dimethylanilin, Dimethylbenzylamin und Pyridin.

Das erfindungsgemäße Verfahren (a) wird im allgemeinen bei Temperaturen zwischen − 20 °C und + 60 °C durchgeführt. Bevorzugt wird der Bereich zwischen − 10 °C und + 40 °C. Die Umsetzungen werden im allgemeinen bei Normaldruck durchgeführt.

Zur Durchführung des erfindungsgemäßen Verfahrens (a) werden die Ausgangsstoffe gewöhnlich in äquimolaren Mengen eingesetzt. Ein Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird bei der erforderlichen Temperatur gerührt. Danach gibt man ein organisches Lösungsmittel, z. B. Toluol, zu und arbeitet die organische Phase wie üblich durch Waschen, Trocknen und Abdestillieren des Lösungsmittels auf.

Das erfindungsgemäße Verfahren (b) wird im allgemeinen bei Temperaturen zwischen 0 °C und 100 °C durchgeführt. Bevorzugt wird der Bereich zwischen 20 °C und 80 °C. Die Umsetzungen werden im allgemeinen bei Normaldruck durchgeführt.

Zur Durchführung des erfindungsgemäßen Verfahrens (b) werden die Ausgangsstoffe gewöhnlich annähernd in äquimolaren Mengen eingesetzt. Ein Überschuß der einen oder anderen Reaktionskomponente bringt keine wesentlichen Vorteile. Die Umsetzung wird im allgemeinen in einem geeigneten Verdünnungsmittel in Gegenward eines Säureakzeptors durchgeführt und das Reaktionsgemisch wird mehrere Stunden bei der erforderlichen Temperatur gerührt. Danach gibt man ein organisches Lösungsmittel, z. B. Toluol, zu und arbeitet die organische Phase wie üblich durch Waschen, trocknen und Abdestillieren des Lösungsmittels auf.

Die neuen Verbindugen fallen in Form von Ölen an, die sich zum Teil nicht unzersetzt destillieren lassen, jedoch durch sogenanntes « Andestillieren », d. h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören :

Aus der Ordnung der Isopoda z. B. Oniscus asellus, Armadillidium vulgare, Porcellio scaber.

Aus der Ordnung der Diplopoda z. B. Blaniulus guttulatus.

Aus der Ordnung der Chilopoda z. B. Geophilus carpophagus, Scutigera spec.

Aus der Ordnung der Symphyla z. B. Scutigerella immaculata.

Aus der Ordnung der Thysanura z. B. Lepisma saccharina.

Aus der Ordnung der Collembola z. B. Onychiurus armatus.

Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z. B. Forficula auricularia.

Aus der Ordnung der Isoptera z. B. Reticulitermes spp.

Aus der Ordnung der Anoplura z. B. Phylloxera vastatrix, Pemphigus spp., Pediculus humanus corporis, Haematopinus spp., Linognathus spp.

Aus der Ordnung der Mallophaga z. B. Trichodectes spp., Damalinea spp.

Aus der Ordnung der Thysanoptera z. B. Hercinothrips femoralis, Thrips tabaci.

Aus der Ordnung der Heteroptera z. B. Eurygaster spp., Dysdercus intermedius, Piesma quadrata, Cimex lectularius, Rhodnius prolixus, Triatoma spp.

Aus der Ordnung der Homoptera z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum

padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z. B. Diprion spp., Hoplocampa spp., Lasius spp., Monomorium pharaonis, Vespa spp.

Aus der Ordnung der Diptera z. B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z. B. Xenopsylla cheopis, Ceratophyllus spp.

Aus der Ordnung der Arachnida z. B. Scorpio maurus, Latrodectus mactans.

Aus der Ordnung der Acarina z. B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die erfindungsgemäßen Wirkstoffe weisen außerdem eine starke mikrobizide, insbesondere fungizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut und des Bodens.

Als Pflanzenschutzmittel können die erfindungsgemäßen, Wirkstoffe mit besonders gutem Erfolg zur systemischen und protektiven Bekämpfung von Reiskrankheiten, wie Pyricularia oryzae eingesetzt werden. Gute Wirkungen werden ebenfalls erzielt bei der Bekämpfung von Oomyceten.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen, sowie ULV-Kalt- und Warmnebel-Formulierungen.

Die Anwendung geschieht in üblicher Weise, z. B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser ; mit verflüssigten gasförmigen Streckmit-

teln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid ; als feste Trägerstoffe kommen in Frage : z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage : z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgier- und/oder schaumerzeugende Mittel kommen in Frage : z. B. nichtionogene und anionische Emulgatoren, wie Polyoxyethylen-Fettsäure-Ester, Polyoxyethylen-Fettalkohol-Ether, z. B. Alkylarylpolyglykol-Ether, Alkylsulfonate, Alkylsulfate, Arylsulfonate sowie Eiweißhydrolysate ; als Dispergiermittel kommen in Frage : z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,000 000 1 bis zu 95 Gew.-% Wirkstoff, vorzugsweise zwischen 0,000 1 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,000 01 bis 0,1 Gew.-%, vorzugsweise von 0,000 1 bis 0,02 Gew.-%, am Wirkungsort erforderlich.

Die erfindungsgemäßen Verfahrensvarianten (a) und (b) sollen anhand der folgenden Herstellungsbeispiele erläutert werden :

Beispiel 1

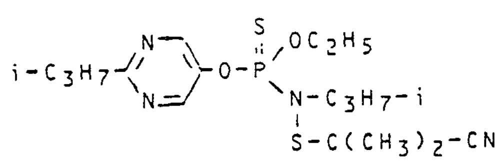

(Verfahrensvariante a)

Zu einer Suspension von 2,3 g (0,075 Mol) 80 %igem Natriumhydrid in 100 ml Tetrahydrofuran werden 15,2 g (0,05 Mol) O-Ethyl-O-(2-i-propyl-pyrimidin-5-yl)-N-i-propyl-thiophosphorsäureesteramid gegeben und 0,5 Stunden bei 50 °C bis 60 °C gerührt. Anschließend werden bei einer Temperatur von 5 °C bis 10 °C 6,8 g (0,05 Mol) 1-(1-Cyano-1-methyl)-ethylsulfenylchlorid zugetropft und 1 Stunde bei 20 °C nachgerührt. Bei 20 °C bis 25 °C wird tropfenweise mit 10 ml Wasser versetzt, mit 200 ml Toluol verdünnt und zweimal mit jeweils 50 ml Wasser extrahiert. Die organische Phase wird über Natriumsulfat getrocknet und im Wasserstrahlvakuum eingedampft. Der Rückstand wird im Hochvakuum andestilliert.

Man erhält 16,2 g (81 % der Theorie) O-Ethyl-O-(2-i-propyl-pyrimidin-5-yl)-N-(i-propyl)-N-(1-cyano-1-methyl-ethylthio)-thiophosphorsäureesteramid als braunes Öl mit einem Brechungsindex $n_D^{20}$ : 1,518 3.

Beispiel 2

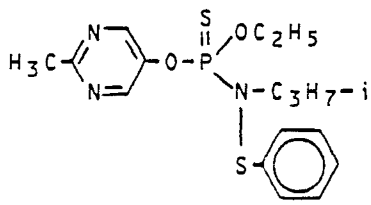

(Verfahrensvariante b)

Eine Mischung aus 5,72 g (0,052 Mol) 5-Hydroxy-2-methylpyrimidin, 10 g (0,075 Mol) Kaliumcarbonat, 100 ml Acetonitril und 15,5 g (0,05 Mol) O-Ethyl-N-(i-propyl)-N-(phenylthio)-thiophosphorsäureesteramidchlorid wird 2 Stunden bei 40 °C gerührt. Nach Zugabe von 200 ml Toluol wird zweimal mit jeweils 30 ml Wasser extrahiert, die organische Phase wird über Natriumsulfat getrocknet und das Lösungsmittel im Wasserstrahlvakuum entfernt. Der Rückstand wird im Hochvakuum destilliert.

Man erhält auf diese Weise 17 g (89 % der Theorie) O-Ethyl-O-(2-methyl-pyrimidin-5-yl)-N-(i-propyl)-N-(phenylthio)-thiophosphorsäureesteramid in Form eines gelben Öles mit einem Brechungsindex $n_D^{21}$ : 1,570 9.

Analog Beispiel (1) und (2) bzw. Verfahrensvariante (a) und (b) wurden die folgenden Verbindungen der Formel (I) erhalten :

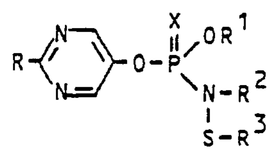

(I)

Tabelle 1

| Beisp.-Nr. | R | $R^1$ | $R^2$ | $R^3$ | X | Brechungsindex |
|---|---|---|---|---|---|---|
| 3 | $C_3H_7$-iso | $C_2H_5$ | $C_3H_7$-iso | 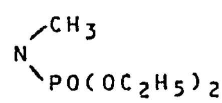 | S | $n_D^{26}$ : 1,5028 |
| 4 | $CH_3$ | $C_2H_5$ | $C_3H_7$-iso | 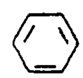 | O | $n_D^{26}$ : 1,5471 |
| 5 | $CH_3$ | $C_2H_5$ | $CH_3$ | 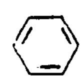 | S | $n_D^{26}$ : 1,5780 |
| 6 | $CH_3$ | $C_2H_5$ | $CH_3$ | $C(CH_3)_2CN$ | S | $n_D^{26}$ : 1.5312 |
| 7 | $CH_3$ | $C_2H_5$ | $CH_3$ | $CCl_2F$ | S | $n_D^{20}$ : 1,5382 |
| 8 | $CH_3$ | $C_2H_5$ | $CH_3$ | 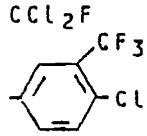 | S | $n_D^{20}$ : 1,5522 |
| 9 | $C_4H_9$-tert. | $C_2H_5$ | $C_2H_5$ | 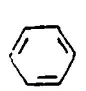 | S | $N_D^{20}$ : 1,5591 |
| 10 | $C_4H_9$-tert. | $C_2H_5$ | $C_2H_5$ | $CCl_2F$ | S | $n_D^{20}$ : 1,5210 |
| 11 | $C_4H_9$-tert. | $C_2H_5$ | $C_2H_5$ | $CH_2-CH_2Cl$ | S | $n_D^{20}$ : 1,5271 |

Tabelle 1 (Fortsetzung)

| Beisp.-Nr. | R | $R^1$ | $R^2$ | $R^3$ | X | Brechungsindex |
|---|---|---|---|---|---|---|
| 12 | 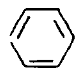 | $C_2H_5$ | $C_3H_7$-iso | 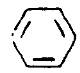 | S | |
| 13 | $C_4H_9$-tert. | $CH_3$ | $C_2H_5$ | 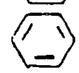 | S | |
| 14 | $C_4H_9$-tert. | $C_3H_7$-iso | $C_2H_5$ | 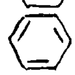 | S | |
| 15 | $C_2H_5$ | $C_2H_5$ | $C_2H_5$ | $C(CH_3)_2CN$ | S | |
| 16 | 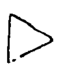 | $C_2H_5$ | $C_2H_5$ | $C_4H_9$-tert. | S | |
| 17 | 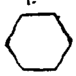 | $C_2H_5$ | $C_3H_7$-iso | 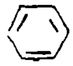 | S | |
| 18 | $C_4H_9$-tert. | $C_2H_5$ | $C_2H_5$ | 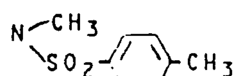 | S | |
| 19 | $C_3H_7$-iso | $CH_3$ | $CH_3$ | 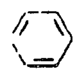 | S | |
| 20 | $C_4H_9$-tert. | $C_3H_7$-iso | $C_3H_7$-iso | $CCl_2F$ | S | |
| 21 | $C_4H_9$-tert. | $C_2H_5$ | $C_2H_5$ | $N(C_4H_9\text{-}n)_2$ | S | |

Die als Ausgangsstoffe zu verwendenden sulfenylierten Phosphorsäureesteramidhalogenide der Formel (V) werden folgendermaßen hergestellt :

Beispiel a

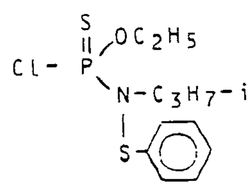

Zu einer Lösung von 20,2 g (0,1 Mol) O-Ethyl-N-i-propylthiophosphorsäureesteramidchlorid in 100 ml Toluol werden bei 0 °C bis 10 °C zuerst 16 g (0,11 Mol) Phenylsulfenylchlorid und anschließend 12 g (0,12 Mol) Triethylamin zugetropft.

Das Gemisch wird 1 Stunde bei 20 °C nachgerührt, anschließend mit 100 ml Toluol versetzt und zweimal mit jeweils 30 ml Wasser extrahiert. Die organische Phase wird über Natriumsulfat getrocknet und im Wasserstrahlvakuum eingeengt. Der Rückstand wird rektifiziert.

Man erhält auf diese Weise 22 g (71 % der Theorie) O-Ethyl-N-(i-propyl)-N-(phenylthio)-thiophosphorsäureesteramidchlorid in Form eines gelben Öls. Kp. : 142 °C/26,7 Pa (0,2 Torr).

Analog Beispiel (a) werden die übrigen Ausgangsprodukte der Formel (V) erhalten.

Die biologische Wirksamkeit der Verbindungen der allgemeinen Formel (I) sei anhand der folgenden Beispiele erläutert :

Beispiel A

Tetranychus-Test (resistent)

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen

Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden ; 0 % bedeutet, daß keine Spinnmilben abgetötet wurden.

Bei diesem Test zeigten z. B. bei einer Wirkstoffkonzentration von 0,1 % die Verbindungen der Herstellungsbeispiele (1), (2), (5) und (6) nach 2 Tagen eine Abtötung von 100 %.

Beispiel B

Phaedon-Larven-Test

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt. Dabei bedeutet 100 %, daß alle Käferlarven abgetötet wurden ; 0 % bedeutet, daß keine Käfer-Larven abgetötet wurden.

Bei diesem Test zeigten z. B. bei einer Wirkstoffkonzentration von 0,01 % die Verbindungen der Herstellungsbeispiele (8), (9) und (10) nach 3 Tagen eine Abtötung von 100 %.

Beispiel C

Grenzkonzentrations-Test/Nematoden

Testnematode : Meloidogyne incognita
Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27 °C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigten z. B. bei einer Wirkstoffkonzentration von 20 ppm die Verbindungen der Herstellungsbeispiele (1), (2), (3), (5), (6) und (11) eine Abtötung von 100 %.

Beispiel D

Grenzkonzentrations-Test/Wurzelsystemische Wirkung

Testinsekt : Phaedon cochleariae
Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter

mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Bei diesem Test zeigten z. B. bei einer Wirkstoffkonzentration von 20 ppm die Verbindungen der Herstellungsbeispiele (4), (5) und (6) eine Abtötung von 100 %.

Beispiel E

Grenzkonzentrations-Test/Wurzelsystemische Wirkung

Testinsekt : Myzus Persicae
Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Bei diesem Test zeigten z. B. bei einer Wirkstoffkonzentration von 20 ppm die Verbindungen der Herstellungsbeispiele (2), (4), (5), (6), (7) und (8) eine Abtötung von 100 %.

Beispiel F

Grenzkonzentrations-Test/Bodeninsekten

Testinsekt : Phorbia antiqua-Maden (im Boden)
Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegeben Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z. B. bei einer Wirkstoffkonzentration von 20 ppm die Verbindungen der Herstellungsbeispiele (1), (9) und (10) eine Abtötung von 100 %.

Beispiel G

Pyricularia-Test (Reis)/protektiv

Lösungsmittel : 12,5 Gewichtsteile Aceton
Emulgator : 0,3 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und verdünnt das Konzentrat mit Wasser und der angegebenen Menge Emulgator auf die gewünschte Konzentration.

Zur Prüfung auf protektive Wirksamkeit bespritzt man junge Reispflanzen mit der Wirkstoffzubereitung bis zur Tropfnässe. Nach dem Abtrocknen des Spritzbelages werden die Pflanzen mit einer wäßrigen

Sporensuspension von Pyricularia oryzae inokuliert. Anschließend werden die Pflanzen in einem Gewächshaus bei 100 % rel. Luftfeuchtigkeit und 25 °C aufgestellt.

4 Tage nach der Inokulation erfolgt die Auswertung des Krankheitsbefalls.

Eine sehr gute Wirksamkeit zeigten in diesem Test z. B. die Verbindungen gemäß folgender Herstellungsbeispiele : (2), (5) und (6).

Beispiel H

Pyricularia-Test (Reis)/systemisch

Lösungsmittel : 12,5 Gewichtsteile Aceton
Emulgator : 0,3 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und verdünnt das Konzentrat mit Wasser und der angegebenen Menge Emulgator auf die gewünschte Konzentration.

Zur Prüfung auf systemische Eigenschaften werden 40 ml der Wirkstoffzubereitung auf Einheitserde gegossen, in der junge Reispflanzen angezogen wurden. 7 Tage nach der Behandlung werden die Pflanzen mit einer wäßrigen Sporensuspension von Pyricularia oryzae inokuliert. Danach verbleiben die Pflanzen in einem Gewächshaus bei einer Temperatur von 25 °C und einer rel. Luftfeuchtigkeit von 100 % bis zur Auswertung.

4 Tage nach der Inokulation erfolgt die Auswertung des Krankheitsbefalls.

Eine gute Wirksamkeit zeigten in diesem Test z. B. die Verbindungen gemäß folgender Herstellungsbeispiele : (2) und (5).

**Patentansprüche**

1. Pyrimidin-5-yl-(thio)-phosphorsäureesteramide der allgemeinen Formel (I)

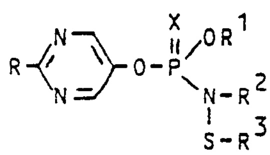

(I)

in welcher

X für Sauerstoff oder Schwefel steht,

R für Wasserstoff, Alkyl, Aryl oder Cycloalkyl steht,

$R^1$ und $R^2$ gleich oder verschieden sind und für Alkyl stehen und

$R^3$ für Alkyl, Halogenalkyl, Cyanoalkyl, Mono- oder Diakylamino, gegebenenfalls substituiertes Aryl oder für die Gruppierungen

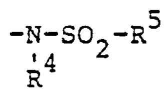

oder

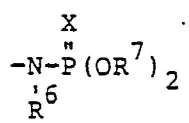

steht, in welcher

X die oben angegebene Bedeutung hat,

$R^4$, $R^6$ und $R^7$ gleich oder verschieden sind und für Alkyl stehen und

$R^5$ für Alkyl oder gegebenenfalls substituiertes Aryl steht.

2. Pyrimidin-5-yl-(thio)-phosphorsäureesteramide gemäß Anspruch 1, wobei

X für Sauerstoff oder Schwefel steht,

R für Wasserstoff, Alkyl mit 1 bis 6 Kohlenstoffatomen, Phenyl oder Naphthyl oder Cycloalkyl mit 3 bis 6 Kohlenstoffatomen steht,

$R^1$ und $R^2$ gleich oder verschieden sind und für Alkyl mit 1 bis 6 Kohlenstoffatomen stehen,

$R^3$ für Alkyl, Halogenalkyl, Cyanoalkyl, Mono- oder Dialkylamino jeweils mit 1 bis 6 Kohlenstoffatomen je Alkylteil, für Phenyl oder Naphthyl, welches durch einen oder mehrere (vorzugsweise 1 bis 3, insbesondere 1 oder 2) gleiche oder verschiedene Substituenten aus der Reihe Halogen, Cyano, Nitro, Halogenalkyl und/oder Halogenalkoxy mit 1 bis 6 Kohlenstoffatomen und 1 bis 5 gleichen oder verschiedenen Halogenatomen und/oder Alkyl mit 1 bis 4 Kohlenstoffatomen substituiert sein kann, steht oder für die Gruppierungen

$$-\underset{R^4}{\underset{|}{N}}-SO_2-R^5 \quad \text{oder} \quad -\underset{R^6}{\underset{|}{N}}-\overset{X}{\overset{\|}{P}}(OR^7)_2$$

steht, in welcher

X die oben angegebene Bedeutung hat,

$R^4$, $R^6$ und $R^7$ gleich oder verschiedenen sind und für Alkyl mit 1 bis 6 Kohlenstoffatomen stehen und

$R^5$ für Alkyl mit 1 bis 6 Kohlenstoffatomen oder für Phenyl oder Naphthyl, welches durch einen oder mehrere (vorzugsweise 1 bis 3, insbesondere 1 oder 2) gleiche oder verschiedene Substituenten aus der Reihe Halogen (wie Fluor, Chlor oder Brom), Cyano, Nitro, Halogenalkyl und/oder Halogenalkoxy mit 1 bis 6 Kohlenstoffatomen und 1 bis 5 gleichen oder verschiedenen Halogenatomen und/oder Alkyl mit 1 bis 4 Kohlenstoffatomen substituiert sein kann, steht.

3. Pyrimidin-5-yl-(thio)-phosphorsäureesteramide gemäß Anspruch 1, wobei

X für Sauerstoff oder Schwefel steht,

R für Wasserstoff, Alkyl mit 1 bis 4 Kohlenstoffatomen, Phenyl oder Cycloalkyl mit 3 bis 6 Kohlenstoffatomen steht,

$R^1$ und $R^2$ gleich oder verschieden sind und für Alkyl mit 1 bis 4 Kohlenstoffatomen oder n-Pentyl, 1-Methyl-butyl, 2-Methyl-butyl, 3-Methyl-butyl, 1,1-Dimethyl-propyl, 2,2-Dimethyl-propyl, 1,2-Dimethyl-propyl und 1-Ethyl-propyl, stehen,

$R^3$ für Alkyl mit 1 bis 4 Kohlenstoffatomen, Cyanoalkyl mit 1 bis 4 Kohlenstoffatomen, Halogenalkyl mit 1 bis 4 Kohlenstoffatomen und 1 bis 5 Halogenatomen, Mono- oder Dialkylamino mit 1 bis 4 Kohlenstoffatomen je Alkylgruppe oder für Phenyl, welches durch einen oder zwei gleiche oder verschiedene Substituenten aus der Reihe Halogen, Cyano, Nitro, Alkyl mit 1 bis 4 Kohlenstoffatomen, Halogenalkyl mit 1 bis 4 Kohlenstoffatomen, und 1 bis 3 Halogenatomen und/oder Halogenalkoxy mit 1 bis 4 Kohlenstoffatomen und 1 bis 3 Halogenatomen substituiert sein kann, steht, oder für die Gruppierungen

$$-\underset{R^4}{\underset{|}{N}}-SO_2-R^5 \quad \text{oder} \quad -\underset{R^6}{\underset{|}{N}}-\overset{X}{\overset{\|}{P}}(OR^7)_2$$

steht, in welcher

X die oben angegebene Bedeutung hat,

$R^4$, $R^6$ und $R^7$ gleich oder verschieden sind und für Alkyl mit 1 bis 4 Kohlenstoffatomen stehen und

$R^5$ für Alkyl mit 1 bis 4 Kohlenstoffatomen, Phenyl, welches durch einen oder zwei gleiche oder verschiedene Substituenten aus der Reihe Halogen, Cyano, Nitro, Alkyl mit 1 bis 4 Kohlenstoffatomen, Halogenalkyl mit 1 bis 4 Kohlenstoffatomen und 1 bis 3 Halogenatomen und/oder Halogenalkoxy mit 1 bis 4 Kohlenstoffatomen und 1 bis 3 Halogenatomen substituiert sein kann, steht.

4. Pyrimidin-5-yl-(thio)-phosphorsäureesteramide gemäß Anspruch 1, wobei

X für Sauerstoff oder Schwefel steht,

R für Wasserstoff, Methyl, Ethyl, n-Propyl, i-Propyl, n-Butyl, i-Butyl, sec.-Butyl, tert.-Butyl, Phenyl, Cyclopropyl und Cyclohexyl steht,

$R^1$ und $R^2$ gleich oder verschieden sind und für Methyl, Ethyl, n-Propyl, i-Propyl, n-Butyl, i-Butyl, sec.-Butyl, tert.-Butyl, n-Pentyl, 1-Methylbutyl, 2-Methyl-butyl, 3-Methyl-butyl, 1,1-Dimethyl-propyl, 1,2-Dimethyl-propyl, 2,2-Dimethyl-propyl oder 1-Ethyl-propyl stehen,

$R^3$ für Methyl, Ethyl, n-Propyl, i-Propyl, n-Butyl, i-Butyl, sec.-Butyl, tert.-Butyl, Cyano-n-propyl, Cyano-i-propyl, Chlormethyl, Chlorethyl, Dichlorfluormethyl, Di-(n)-propylamino, Di-(i)-propylamino, Di-(n)-butylamino, Phenyl, Chlorphenyl, Methylphenyl, Chlor-trifluormethylphenyl oder für die Gruppierungen

$$-\underset{R^4}{\underset{|}{N}}-SO_2-R^5 \quad \text{oder} \quad -\underset{R^6}{\underset{|}{N}}-\overset{X}{\overset{\|}{P}}(OR^7)_2$$

steht, in welcher

X die oben angegebene Bedeutung hat,

$R^4$, $R^6$ und $R^7$ gleich oder verschieden sind und für Methyl, Ethyl, n-Propyl und/oder i-Propyl stehen und

$R^5$ für Methyl, Phenyl und Methylphenyl steht.

5. Pyrimidin-5-yl-(thio)-phosphorsäureesteramide gemäß den Ansprüchen 1 bis 4, wobei X für Schwefel steht.

6. Verfahren zur Herstellung von substituierten Pyrimidin-5-yl-(thio)-phosphorsäureesteramiden der allgemeinen Formel (I)

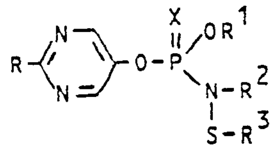

(I)

in welcher

X für Sauerstoff oder Schwefel steht,

R für Wasserstoff, Alkyl, Aryl oder Cycloalkyl steht,

$R^1$ oder $R^2$ gleich oder verschieden sind und für Alkyl stehen und

$R^3$ für Alkyl, Halogenalkyl, Cyanoalkyl, Mono- oder Dialkylamino, gegebenenfalls substituiertes Aryl oder für die Gruppierungen

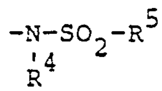 oder 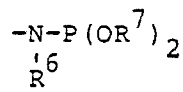

steht, in welcher

X die oben angegebene Bedeutung hat,

$R^4$, $R^6$ und $R^7$ gleich oder verschieden sind und für Alkyl stehen und

$R^5$ für Alkyl oder gegebenenfalls substituiertes Aryl steht,

dadurch gekennzeichnet, daß man

a) Phosphorsäureesteramide der allgemeinen Formel (II)

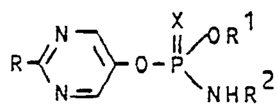

(II)

in welcher X, R, $R^1$ und $R^2$ die oben angegebene Bedeutung haben, mit Sulfenylhalogeniden der allgemeinen Formel (III),

$$R^3—S—Hal \qquad (III)$$

in welcher

$R^3$ die oben angegebene Bedeutung hat und

Hal für Halogen, wie Chlor oder Brom steht,

gegebenenfalls in Gegenwart eines Säureakzeptors und gegebenenfalls in Gegenwart eines Verdünnungsmittels umsetzt, oder

b) 5-Hydroxypyrimidine der allgemeinen Formel (IV),

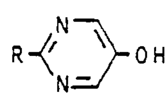

(IV)

in welcher R die oben angegebene Bedeutung hat, oder die entsprechenden Alkalimetall-, Erdalkalimetall- oder Ammoniumsalze mit sulfenylierten Phosphorsäureesteramidhalogeniden der allgemeinen Formel (V),

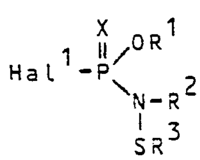

(V)

in welcher

X, $R^1$, $R^2$ und $R^3$ die oben angegebene Bedeutung haben und

$Hal^1$ für Halogen, wie Chlor oder Brom, steht,

gegebenenfalls in Gegenwart eines Säureakzeptors und gegebenenfalls in Gegenwart eines Verdünnungsmittels umsetzt.

7. Schädlingsbekämpfungsmittel, gekennzeichnet durch einen Gehalt an mindestens einer Verbindung der Formel (I) gemäß Anspruch 1 oder 6.

8. Verwendung von Verbindungen der Formel (I) gemäß Anspruch 1 oder 6 zur Bekämpfung von Schädlingen, insbesondere Insekten, Akariden, Nematoden und Mikroorganismen.

9. Verfahren zur Bekämpfung von Schädlingen, dadurch gekennzeichnet, daß man Verbindungen der Formel (I) gemäß Anspruch 1 oder 6 auf die Schädlinge, vorzugsweise Insekten, Akariden, Nematoden und Mikroorganismen oder ihren Lebensraum einwirken läßt.

10. Verfahren zur Herstellung von Schädlingsbekämpfungsmitteln, dadurch gekennzeichnet, daß man Verbindungen der Formel (I) gemäß Anspruch 1 oder 6 mit Streckmitteln und/oder oberflächenaktiven Mitteln vermischt.

**Claims**

1. Pyrimidin-5-yl-(thio) phosphoric acid ester-amides of the general formula (I)

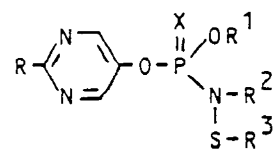

(I)

in which

X represents oxygen or sulphur,

R represents hydrogen, alkyl, aryl or cycloalkyl,

$R^1$ and $R^2$ are identical or different and represent alkyl and

$R^3$ represents alkyl, halogenoalkyl, cyanoalkyl, mono- or di-alkylamino, optionally substituted aryl or the groupings

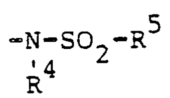 or 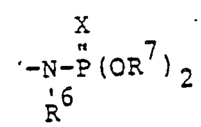

in which

X has the abovementioned meaning,

$R^4$, $R^6$ and $R^7$ are identical or different and represent alkyl and

$R^5$ represents alkyl or optionally substituted aryl.

2. Pyrimidin-5-yl-(thio) phosphoric acid ester-amides according to Claim 1, wherein

X represents oxygen or sulphur,

R represents hydrogen, alkyl with 1 to 6 carbon atoms, phenyl or naphthyl or cycloalkyl with 3 to 6 carbon atoms,

$R^1$ and $R^2$ are identical or different and represent alkyl with 1 to 6 carbon atoms,

$R^3$ represents alkyl, halogenoalkyl, cyanoalkyl, mono- or di-alkylamino with in each case 1 to 6 carbon atoms per alkyl part, phenyl or naphthyl which can be substituted by one or more (preferably 1 to 3, in particular 1 or 2) identical or different substituents from the series comprising halogen, cyano, nitro, halogenoalkyl, and/or halogenoalkoxy with 1 to 6 carbon atoms and 1 to 5 identical or different halogen atoms and/or alkyl with 1 to 4 carbon atoms, or the groupings

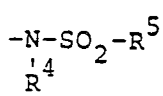 or 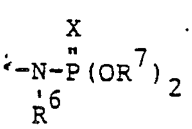

in which

X has the abovementioned meaning,

$R^4$, $R^6$ and $R^7$ are identical or different and represent alkyl with 1 to 6 carbon atoms, and $R^5$ represents alkyl with 1 to 6 carbon atoms, or phenyl or naphthyl which can be substituted by one or more (preferably 1 to 3, in particular 1 or 2) identical or different substituents from the series comprising halogen (such as fluorine, chlorine or bromine), cyano, nitro, halogenoalkyl and/or halogenoalkoxy with 1 to 6 carbon atoms and 1 to 5 identical or different halogen atoms and/or alkyl with 1 to 4 carbon atoms.

3. Pyrimidin-5-yl-(thio) phosphoric acid ester-amides according to Claim 1, wherein

X represents oxygen or sulphur,

R represents hydrogen, alkyl with 1 to 4 carbon atoms, phenyl or cycloalkyl with 3 to 6 carbon atoms,

$R^1$ and $R^2$ are identical or different and represent alkyl with 1 to 4 carbon atoms or n-pentyl, 1-methyl-butyl, 2-methyl-butyl, 3-methyl-butyl, 1,1-dimethyl-propyl, 2,2-dimethyl-propyl, 1,2-dimethyl-propyl and 1-ethyl-propyl,

$R^3$ represents alkyl with 1 to 4 carbon atoms, cyanoalkyl with 1 to 4 carbon atoms, halogenoalkyl with 1 to 4 carbon atoms and 1 to 5 halogen atoms, mono- or di-alkylamino with 1 to 4 carbon atoms per alkyl group, or phenyl, which can be substituted by one or two identical or different substituents from the series comprising halogen, cyano, nitro, alkyl with 1 to 4 carbon atoms, halogenoalkyl with 1 to 4 carbon atoms and 1 to 3 halogen atoms and/or halogenoalkoxy with 1 to 4 carbon atoms and 1 to 3 halogen atoms, or the groupings

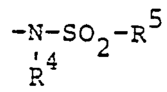 or 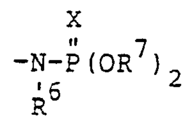

in which

X has the abovementioned meaning,

$R^4$, $R^6$ and $R^7$ are identical or different and represent alkyl with 1 to 4 carbon atoms and $R^5$ represents alkyl with 1 to 4 carbon atoms, or phenyl, which can be substituted by one or two identical or different substituents from the series comprising halogen, cyano, nitro, alkyl with 1 to 4 carbon atoms, halogenoalkyl with 1 to 4 carbon atoms and 1 to 3 halogen atoms and/or halogenoalkoxy with 1 to 4 carbon atoms and 1 to 3 halogen atoms.

4. Pyrimidin-5-yl-(thio) phosphoric acid ester-amides according to Claim 1, wherein

X represents oxygen or sulphur,

R represents hydrogen, methyl, ethyl, n-propyl, i-propyl, n-butyl, i-butyl, sec.-butyl, tert.-butyl, phenyl, cyclopropyl and cyclohexyl,

$R^1$ and $R^2$ are identical or different and represent methyl, ethyl, n-propyl, i-propyl, n-butyl, i-butyl, sec.-butyl, tert.-butyl, n-pentyl, 1-methyl-butyl, 2-methyl-butyl, 3-methyl-butyl, 1,1-dimethyl-propyl, 1,2-dimethyl-propyl, 2,2-dimethyl-propyl or 1-ethyl-propyl,

$R^3$ represents methyl, ethyl, n-propyl, i-propyl, n-butyl, i-butyl, sec.-butyl, tert.-butyl, cyano-n-propyl, cyano-i-propyl, chloromethyl, chloroethyl, dichlorofluoromethyl, di-(n)-propylamino, di-(i)-propylamino, di-(n)-butylamino, phenyl, chlorophenyl, methylphenyl, chloro-trifluoromethyl-phenyl or the groupings

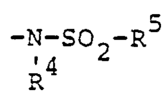 or 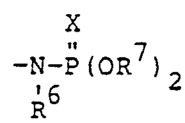

in which

X has the abovementioned meaning,

$R^4$, $R^6$ and $R^7$ are identical or different and represent methyl, ethyl, n-propyl and/or i-propyl and

$R^5$ represents methyl, phenyl and methylphenyl.

5. Pyrimidin-5-yl-(thio)phosphoric acid ester-amides according to Claims 1 to 4, wherein X represents sulphur.

6. Process for the preparation of substituted pyrimidin-5-yl-(thio)phosphoric acid ester-amides of the general formula (I)

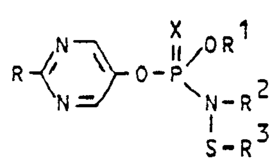 (I)

in which

X represents oxygen or sulphur,

R represents hydrogen, alkyl, aryl or cycloalkyl,

$R^1$ or $R^2$ are identical or different and represent alkyl and

$R^3$ represents alkyl, halogenoalkyl, cyanoalkyl, mono- or di-alkylamino, optionally substituted aryl or the groupings

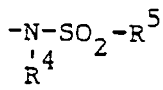 . or 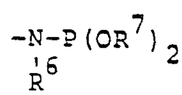

in which
X has the abovementioned meaning,
$R^4$, $R^6$ and $R^7$ are identical or different and represent alkyl and
$R^5$ represents alkyl or optionally substituted aryl,
characterised in that
a) phosphoric acid ester-amides of the general formula (II)

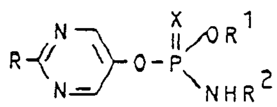 (II)

in which X, R, $R^1$ and $R^2$ have the abovementioned meaning, are reacted with sulphenyl halides of the general formula (III)

$R^3$—S—Hal (III)

in which
$R^3$ has the abovementioned meaning and
Hal represents halogen, such as chlorine or bromine, if appropriate in the presence of an acid acceptor and if appropriate in the presence of a diluent, or
b) 5-hydroxypyrimidines of the general formula (IV)

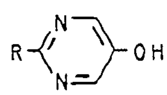 (IV)

in which R has the abovementioned meaning, or the corresponding alkali metal, alkaline earth metal or ammonium salts are reacted with sulphenylated phosphoric acid ester-amide halides of the general formula (V)

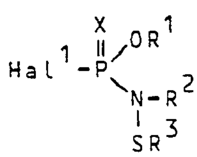 (V)

in which
X, $R^1$, $R^2$ and $R^3$ have the abovementioned meaning and
$Hal^1$ represents halogen, such as chlorine or bromine,
if appropriate in the presence of an acid acceptor and if appropriate in the presence of a diluent.

7. Agents for combating pests, characterised in that they contain at least one compound of the formula (I) according to Claim 1 or 6.

8. Use of compounds of the formula (I) according to Claim 1 or 6 for combating pests, in particular insects, acarids, nematodes and micro-organisms.

9. Method of combating pests, characterised in that compounds of the formula (I) according to Claim 1 or 6 are allowed to act on the pests, preferably insects, acarids, nematodes and micro-organisms, or their environment.

10. Process for the preparation of agents for combating pests, characterised in that compounds of the formula (I) according to Claim 1 or 6 are mixed with extenders and/or surface-active agents.

**Revendications**

1. Amides d'esters de pyrimidine-5-yle d'acide (thio)-phosphorique de formule générale (I)

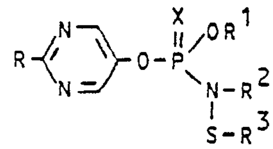 (I)

dans laquelle

X représente l'oxygène ou le soufre,

R représente l'oxygène, un groupe alkyle, aryle ou cycloalkyle,

$R^1$ et $R^2$ sont identiques ou différents et représentent des groupes alkyle et

$R^3$ est un groupe alkyle, halogénalkyle, cyanalkyle, monoalkylamino ou dialkylamino, aryle éventuellement substitué ou les groupements

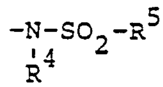 ou 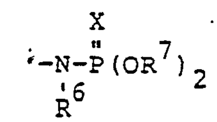

où

X a la définition indiquée ci-dessus,

$R^4$, $R^6$ et $R^7$ sont identiques ou différents et représentent des groupes alkyle et

$R^5$ est un groupe alkyle ou un groupe aryle éventuellement substitué.

2. Amides d'esters de pyrimidine-5-yle d'acide (thio)-phosphorique suivant la revendication 1, dans lesquels

X désigne l'oxygène ou le soufre,

R est l'hydrogène, un groupe alkyle ayant 1 à 6 atomes de carbone, phényle ou naphthyle ou un groupe cycloalkyle ayant 3 à 6 atomes de carbone,

$R^1$ et $R^2$ sont identiques ou différents et représentent des groupes alkyle ayant 1 à 6 atomes de carbone,

$R^3$ désigne un groupe alkyle, halogénalkyle, cyanalkyle, monoalkylamino ou dialkylamino ayant chacun 1 à 6 atomes de carbone par partie alkyle, un groupe phényle ou un groupe naphtyle qui peut être substitué par un ou plusieurs (de préférence 1 à 3, notamment 1 ou 2) substituants identiques ou différents de la série halogéno, cyano, nitro, halogénalkyle et/ou halogénalkoxy ayant 1 à 6 atomes de carbone et 1 à 5 atomes d'halogènes égaux ou différents et/ou alkyle ayant 1 à 4 atomes de carbone, ou les groupements

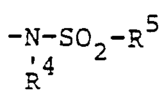 ou 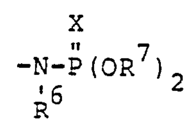

dans lesquels

X a la définition indiquée ci-dessus,

$R^4$, $R^6$ et $R^7$ sont identiques ou différents et représentent des groupes alkyle ayant 1 à 6 atomes de carbone et

$R^5$ est un groupe alkyle ayant 1 à 6 atomes de carbone ou un groupe phényle ou naphthyle qui peut être substitué par un ou plusieurs (de préférence 1 à 3, notamment 1 ou 2) substituants identiques ou différents de la série halogéno (tels que fluoro, chloro ou bromo) cyano, nitro, halogénalkyle et/ou halogénalkoxy ayant 1 à 6 atomes de carbone et 1 à 5 atomes d'halogènes égaux ou différents et/ou alkyle ayant 1 à 4 atomes de carbone.

3. Amides d'esters de pyrimidine-5-yle d'acide (thio)-phosphorique suivant la revendication 1, dans lesquels

X désigne l'oxygène ou le soufre,

R est l'hydrogène, un groupe alkyle ayant 1 à 4 atomes de carbone, phényle ou cycloalkyle ayant 3 à 6 atomes de carbone,

$R^1$ et $R^2$ sont identiques ou différents et représentent des groupes alkyle ayant 1 à 4 atomes de carbone ou des groupes n-pentyle, 1-méthylbutyle, 2-méthylbutyle, 3-méthylbutyle, 1,1-diméthylpropyle, 2,2-diméthylpropyle, 1,2-diméthylpropyle et 1-éthylpropyle,

$R^3$ est un groupe alkyle ayant 1 à 4 atomes de carbone, cyanalkyle ayant 1 à 4 atomes de carbone, halogénalkyle ayant 1 à 4 atomes de carbone et 1 à 5 atomes d'halogènes, mono- ou dialkylamino ayant 1 à 4 atomes de carbone par groupe alkyle ou un groupe phényle qui peut être substitué par un ou deux substituants égaux ou différents de la série halogéno, cyano, nitro, alkyle ayant 1 à 4 atomes de carbone,

halogénalkyle ayant 1 à 4 atomes de carbone et 1 à 3 atomes d'halogènes et/ou halogénalkoxy ayant 1 à 4 atomes de carbone et 1 à 3 atomes d'halogènes, ou les groupements

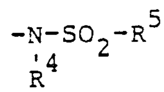 ou 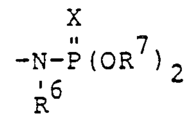

où

X a la définition indiquée ci-dessus,

$R^4$, $R^6$ et $R^7$ sont identiques ou différents et représentent des groupes alkyle ayant 1 à 4 atomes de carbone et

$R^5$ est un groupe alkyle ayant 1 à 4 atomes de carbone, phényle qui peut être substitué par un ou deux substituants identiques ou différents de la série halogéno, cyano, nitro, alkyle ayant 1 à 4 atomes de carbone halogénalkyle ayant 1 à 4 atomes de carbone et 1 à 3 atomes d'halogènes et/ou halogénoalkoxy ayant 1 à 4 atomes de carbone et 1 à 3 atomes d'halogènes.

4. Amides d'esters de pyrimidine-5-yle d'acide (thio)-phosphorique suivant la revendication 1, dans lesquels

X désigne l'oxygène ou le soufre,

R représente l'hydrogène et les groupes méthyle, éthyle, n-propyle, isopropyle, n-butyle, isobutyle, sec.-butyle, tertio-butyle, phényle, cyclopropyle et cyclohexyle,

$R^1$ et $R^2$ sont identiques ou différents et représentent les groupes méthyle, éthyle, n-propyle, isopropyle, n-butyle, isobutyle, sec.-butyle, tertio-butyle, n-pentyle, 1-méthylbutyle, 2-méthylbutyle, 3-méthylbutyle, 1,1-diméthylpropyle, 1,2-diméthylpropyle, 2,2-diméthylpropyle ou 1-éthylpropyle,

$R^3$ représente les groupes méthyle, éthyle, n-propyle, isopropyle, n-butyle, isobutyle, sec.-butyle, tertio-butyle, cyano-n-propyle, cyano-isopropyle, chlorométhyle, chloréthyle, dichlorofluorométhyle, di-(n)-propylamino, di-(i)-propylamino, di-(n)-butylamino, phényle, chlorophényle, méthylphényle, chlorotrifluorométhylphényle, ou les groupements

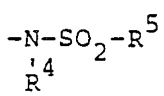 ou 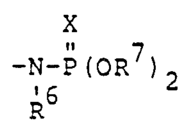

dans lesquels

X a la définition indiquée ci-dessus,

$R^4$, $R^6$ et $R^7$ sont identiques ou différents et représentent les groupes méthyle, éthyle, n-propyle et/ou isopropyle et

$R^5$ représente les groupes méthyle, phényle et méthylphényle.

5. Amides d'esters de pyrimidine-5-yle d'acide (thio)-phosphorique suivant les revendications 1 à 4, dans lesquels X représente le soufre.

6. Procédé de production d'amides d'esters de pyrimidine-5-yle d'acide (thio)-phosphorique substitués de formule générale (I)

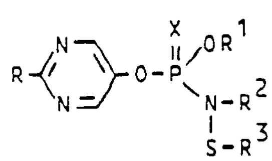

(I)

dans laquelle

X représente l'oxygène ou le soufre,

R représente l'hydrogène, un groupe alkyle, aryle ou cycloalkyle,

$R^1$ et $R^2$ sont identiques ou différents et représentent des groupes alkyle et

$R^3$ est un groupe alkyle, halogénalkyle, cyanalkyle, monoalkylamino ou dialkylamino, aryle éventuellement substitué ou les groupements

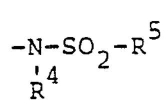 ou 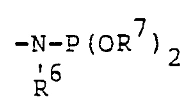

où

X a la définition indiquée ci-dessus,

$R^4$, $R^6$ et $R^7$ sont identiques ou différents et représentent des groupes alkyle et

$R^5$ est un groupe alkyle ou un groupe aryle éventuellement substitué.

caractérisé en ce que

a) on fait réagir des amides d'esters d'acide phosphorique de formule générale (II)

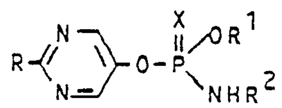

(II)

dans laquelle X, R, $R^1$ et $R^2$ ont la définition indiquée ci-dessus, avec des halogénures de sulfényle de formule générale (III)

$R^3$—S—Hal (III)

dans laquelle

$R^3$ a la définition indiquée ci-dessus et

Hal désigne un halogène, tel que le chlore ou le brome, éventuellement en présence d'un accepteur d'acide et en la présence éventuelle d'un diluant, ou bien

b) on fait réagir des 5-hydroxypyrimidines de formule générale (IV)

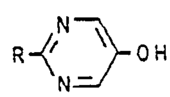

(IV)

dans laquelle R a la définition indiquée ci-dessus, ou les sels correspondants de métaux alcalins, de métaux alcalino-terreux ou d'ammonium avec des halogénures d'amides d'esters sulfénylés d'acide phosphorique de formule générale (V)

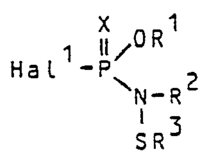

(V)

dans laquelle

X, $R^1$, $R^2$ et $R^3$ ont la définition indiquée ci-dessus, et

$Hal^1$ désigne un halogène tel que le chlore ou le brome, éventuellement en présence d'un accepteur d'acide et le cas échéant en présence d'un diluant.

7. Compositions pesticides, caractérisées par une teneur en au moins un composé de formule (I) suivant la revendication 1 ou 6.

8. Utilisation de composés de formule (I) suivant la revendication 1 ou 6 pour combattre des parasites, notamment des insectes, des acariens, des nématodes et des micro-organismes.

9. Procédé pour combattre des parasites, caractérisé en ce qu'on fait agir des composés de formule (I) suivant la revendication 1 ou 6 sur les parasites, de préférence des insectes, des acariens, des nématodes et des micro-organismes, ou sur leur milieu.

10. Procédé de préparation de compositions pesticides, caractérisé en ce qu'on mélange des composés de formule (I) suivant la revendication 1 ou 6 avec des diluants et/ou avec des agents tensio-actifs.